# EUROPÄISCHE PATENTSCHRIFT

(11) **EP 0 960 573 B1**
(45) Veröffentlichungstag und Bekanntmachung des Hinweises auf die Patenterteilung: **29.05.2002**
(21) Anmeldenummer: 99100839.2
(22) Anmeldetag: 19.01.1999
(51) Int. Cl.: A23L 2/54, B01F 3/04

(54) **Vorrichtung zur Herstellung von kohlesäurehaltigem Wasser**
Device for preparing carbonated water
Dispositif pour la préparation d'eau carbonatée

(30) Priorität: 28.05.1998 DE 19823786
(43) Veröffentlichungstag der Anmeldung: 01.12.1999
(73) Patentinhaber: Stricker, Heinz, 32791 Lage (DE)
(72) Erfinder: Stricker, Heinz, 32791 Lage (DE)
(74) Vertreter: Stracke, Alexander, Dipl.-Ing.

(56) Entgegenhaltungen:
- EP-A- 0 022 422
- EP-A- 0 296 570
- WO-A-91/00137
- GB-A- 1 072 955
- US-A- 3 370 755
- US-A- 3 926 342
- US-A- 5 417 147

## Beschreibung

Die vorliegende Erfindung betrifft eine Vorrichtung zur Herstellung von kohlesäurehaltigem Wasser gemäß dem Oberbegriff des Anspruchs 1.

Derartige Vorrichtungen werden bislang vorwiegend im gewerblichen Bereich eingesetzt.

EP-A-0 296 570 und GB-A-1 072 955 offenbaren Vorrichtungen zur Herstellung von Kohlensäurehaltigen Getränken. EP-A-0 022 412 und US-A-5 417 147 bringen ans Licht Vorrichtungen zur Herstellung von kohlensäurehaltigen Getränken, die eine CO₂-Zuführung in ihrem Bodenbereich aufweisen.

Um eine ausreichende Aufnahme des im Druckgefäß befindlichen Wassers mit Kohlensäure zu erreichen, ist eine erhebliche Druckdifferenz zwischen dem Wasser und o der eingefüllten Kohlensäure erforderlich. Während die Kohlensäure üblicherweise unter einem Druck von 2 bar einströmt, wird das Wasser, zweckmäßigerweise Leitungswasser, auf einen Druck von beispielsweise 10 bar gebracht. Hierdurch wird die Aufnahmefähigkeit des Wassers für Kohlensäure soweit hergestellt, daß Kohlensäure in gewünschter und ausreichender Menge aufgenommen werden kann.

Der apparative Aufwand der bekannten Vorrichtungen ist jedoch relativ groß. So wird der hohe Wasserdruck durch eine separate Pumpe erzeugt, die über zwei Elektroden gesteuert wird, mit denen der Wasserstand im Druckgefäß erfaßbar ist.

Bei Erreichen eines unteren Pegels wird die Pumpe ein- und bei Erreichen eines oberen Pegels ausgeschaltet, wobei das Druckgefäß zu zwei Dritteln mit Wasser befüllt wird, während ein Drittel des Druckgefäß-Volumens ein CO₂-Kopfdruck-Polster bildet.

Neben einer notwendigen Stromzufuhr für die Pumpe ist als weiterer Nachteil der bekannten Vorrichtung anzusehen, daß bei auftretenden Störungen der Pumpe, die überdies im Regelfall eine aufwendige Reparatur zur Folge hat, natürlich der Betrieb unterbrochen ist.

Überdies ist die Herstellung des kohlesäurehaltigen Wassers sowohl bedingt durch den Betrieb der Pumpe wie auch durch das Einspritzen des Wassers unter hohem Druck in das Druckgefäß mit störenden Geräuschen verbunden.

Der vorliegenden Erfindung liegt daher die Aufgabe zugrunde, eine Vorrichtung der gattungsgemäßen Art so zu gestalten, daß sie konstruktiv einfachst aufgebaut ohne zusätzliche Aggregate betreibbar ist.

Diese Aufgabe wird durch eine Vorrichtung gelöst, die die Merkmale des Anspruchs 1 aufweist.

Eine solche Art ausgebildete Vorrichtung bietet gegenüber der bekannten erhebliche Vorteile.

Zunächst einmal kann auf den Einsatz einer Pumpe vollständig verzichtet werden. Neben der sich daraus ergebenden Kostenreduzierung bei der Herstellung der Vorrichtung ist überdies ein dauerhaft störungsfreier Betrieb gewährleistet, da praktisch keine Verschleißteile mehr vorhanden sind.

Überdies wird nun der Einsatz einer solchen Vorrichtung für den privaten Gebrauch interessant, weil sie wartungsfrei arbeitet und als kompakte Baueinheit herstellbar ist. Hinzu kommt, daß für den Betrieb keine Stromversorgung notwendig ist.

Lediglich ein Anschluß an eine Wasserleitung sowie eine Kühlung des Druckgefäßes oder der Zulaufleitung ist erforderlich.

Dabei ist der Einbau einer solchen Vorrichtung in einem Kühlschrank empfehlenswert, da die Temperatur des mit Kohlensäure zu versetzenden Wassers in optimaler Weise bei etwa 6° Celsius liegen sollte, also im Bereich der Kühltemperatur eines Kühlschranks.

Denkbar ist aber auch, das dem Druckgefäß zuzuführende Wasser vor dem Einspritzen durch ein separates Kühlaggregat zu führen.

Wesentlich für eine optimale Anreicherung des einspritzenden Wassers mit zugeführter Kohlensäure ist neben der Wassertemperatur auch die Druckdifferenz zwischen dem Wasser und der einströmenden Kohlensäure.

Während der Leitungswasserdruck üblicherweise etwa 4 bar beträgt, wird die Kohlensäure unter einem Druck von vorzugsweise 2 bis 2,8 bar zugeführt.

Diese Druckdifferenz zwischen den beiden Medien reicht aus, um ein den gestellten Anforderungen an ein Tafelwasser hinsichtlich seines Kohlensäuregehaltes zu entsprechen.

Zum Betrieb der Vorrichtung wird die mit einer doppelten Rückschlag-Sicherung versehene, an die CO₂-Druckflasche angeschlossene Zuführung geöffnet, wobei an der CO₂-Druckflasche ein Druckminderer angeschlossen ist, so daß das Druckgefäß sich mit Kohlensäure füllt, bis der genannte Druck von 2 bis 2,8 bar erreicht ist.

Anschließend wird die an das Leitungsnetz angeschlossene Zulaufleitung, die im Kopfbereich im Druckgefäß mündet und dort mit einer Sprühdüse versehen ist, geöffnet, so daß das Leitungswasser unter Leitungswasserdruck in den Innenraum des Druckgefäßes gesprüht wird. Dabei reichert sich dieses Wasser sofort mit CO₂ an.

Der Wasserzulauf erfolgt solange, bis sich ein Druckgleichgewicht im Druckgefäß aufgebaut hat, d. h. bis der Druck im Innern des Druckgefäßes dem des aus der Sprühdüse austretenden Wassers entspricht.

Bei Erreichen dieses Druckgleichgewichtes wird die Wasserzufuhr praktisch unterbrochen.

Über einen Zapfhahn, der an ein im Innern des Druckgefäßes vorgesehenes Steigrohr angeschlossen ist, kann das so hergestellte Tafelwasser entnommen werden.

Bei einem Öffnen des Zapfhahnes sinkt der Wasserdruck im Druckgefäß in Bruchteilen von Sekunden gegen Null. Gleichzeitig strömt CO₂ nach, bis zum Erreichen des eingestellten Maximaldrucks. Unter diesem Druck wird dann das Tafelwasser aus dem Zapfhahn entnommen.

Durch den Druckabbau erfolgt automatisch ein Zulauf über die Sprühdüse des Leitungswassers, und zwar so lange, bis sich im Druckgefäß wieder der Leitungswasserdruck eingestellt hat.

Die beschriebene doppelte Rückschlag-Sicherung verhindert, daß Wasser aus dem Druckgefäß in den Druckminderer oder die CO₂-Druckflasche eintreten kann.

Das Druckgefäß ist so dimensioniert, daß sich bei Einstellung des Druckgleichgewichtes im Kopfbereich ein CO₂-Kopfpolster bildet, das ebenfalls der Anreicherung des Wassers mit CO₂ dient.

Anstelle der beschriebenen, druckabhängigen Zuführung des Wassers in das Druckgefäß kann eine Zuführung zeitabhängig erfolgen. Dabei wird der Wasserzulauf über die Sprühdüse durch Betätigen eines Schalters ausgelöst, während ein Abschalten des Wasserzulaufs zeitabhängig erfolgen kann.

Zur Wasserstandserkennung, insbesondere um zu erkennen, wann Wasser nachgefüllt werden muß, kann ein Schwimmer vorgesehen sein.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:

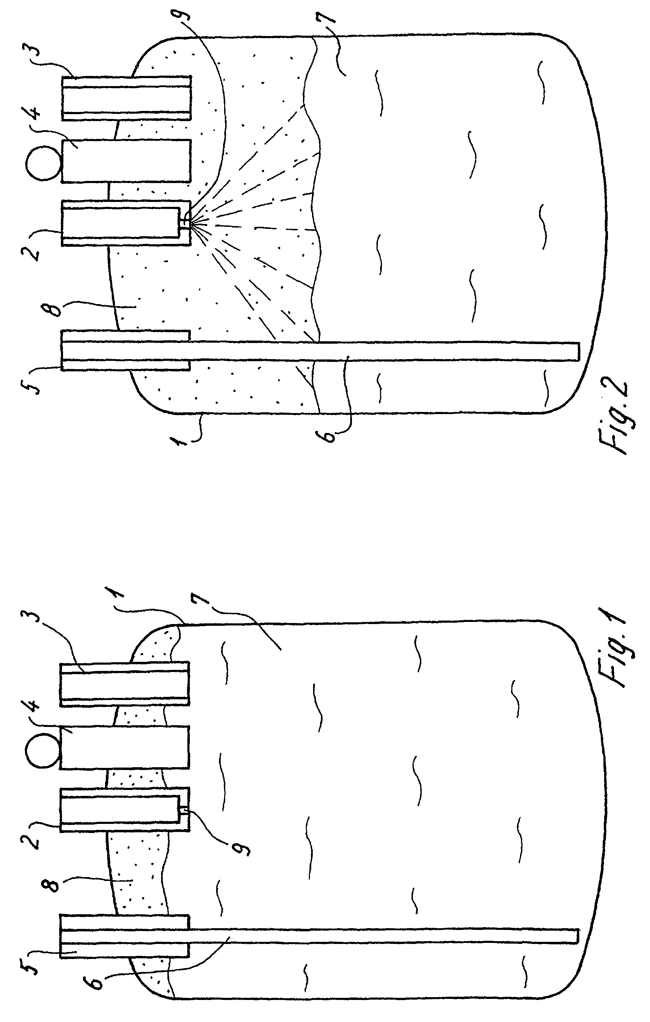

- Fig. 1 und 2: eine erfindungsgemäße Vorrichtung in unterschiedlichen Funktionsstellungen, jeweils in einem schematischen Querschnitt.

In den Figuren ist eine Vorrichtung zur Herstellung von kohlensäurehaltigem Wasser, sogenanntem Tafelwasser, dargestellt, die ein Druckgefäß 1 aufweist. In dieses Druckgefäß 1 mündet ein an ein Wasserleitungsnetz angeschlossener Wasserzulauf 2, über den mittels einer Sprühdüse 9 Wasser unter Leitungsdruck in das Druckgefäß 1 einsprühbar ist.

Weiter ist eine CO₂-Zuführung 3 vorgesehen, die an eine nicht dargestellte CO₂-Druckflasche angeschlossen ist und über die Kohlensäure in das Druckgefäß 1 füllbar ist.

Die CO₂-Zuführung 3 ist mit einem ebenfalls nicht dargestellten Doppel-Rückschlagventil versehen.

Sowohl der Wasserzulauf 2 wie auch die CO₂-Zuführung 3 sind im Kopfbereich des Druckgefäßes 1 angeordnet. Hier ist auch ein Sicherheitsventil 4 angeschlossen, daß bei unzulässig hohem Überdruck in Funktion tritt.

Desweiteren ist an das Druckgefäß 1 ein Zapfhahn 5 angeschlossen, über den mittels eines Steigrohres 6 das mit Kohlensäure versetzte Wasser entnehmbar ist.

In der Figur 1 ist die Vorrichtung in einer Funktionsstellung gezeigt, in der das Druckgefäß 1 mit mit Kohlensäure versetztem Wasser gefüllt ist. Dabei entspricht der Druck des Tafelwassers dem Druck im Leitungsnetz, so daß aus dem Wasserzulauf 2 kein Wasser nachströmen kann. Im Kopfbereich des Druckgefäßes 1 ist ein CO₂-Polster 8 gebildet, in dem das CO₂ unter Annahme des Drucks des Tafelwassers, das das Bezugszeichen 7 hat, komprimiert ist.

Bei einer Entnahme des mit Kohlensäure versetzten Wassers durch den Zapfhahn 5 geht der Druck im Innern des Druckgefäßes 1 praktisch schlagartig gegen Null, wodurch das Wasser aus dem Wasserzulauf 2 über die Sprühdüse 9 dem Druckgefäß 1 zugeführt wird. Gleichzeitig wird die Kohlensäure im CO₂-Polster 8 sowie aus der CO₂-Zuführung 3 vom versprühten Wasser aufgenommen.

Bei Erreichen des Leitungsdrucks im Druckgefäß 1 stoppt die Wasserzufuhr.

Die Erfindung ermöglicht die Herstellung von kohlesäurehaltigem Wasser ohne wesentliche mechanische Bauteile, wobei sich die Wasserzuführung und Versetzung des Wassers mit CO₂ selbsttätig regelt.

## Patentansprüche

1. Vorrichtung zur Herstellung von kohlensäurehaltigem Wasser, mit einem unmittelbar mit dem Leitungsnetz verbundenen Wasserzulauf (2) und einem an eine CO₂-Druckflasche angeschlossenen, mit einem Zapfhahn versehenen Druckgefäß (1), in dem eingesprühtes, unter Druck stehendes, in der Zulaufleitung oder dem Druckgefäß (1) gekühltes Wasser mit CO₂ versetzt wird, **dadurch gekennzeichnet, daß** der Wasserzulauf (2) und eine an die CO₂-Druckflasche angeschlossene CO₂-Zuführung (3) im Kopfbereich des Druckgefäßes (1) angeordnet sind.

2. Vorrichtung nach Anspruch 1, **dadurch gekennzeichnet, daß** das Wasser auf 5 bis 7°, vorzugsweise auf 6° gekühlt ist.

3. Vorrichtung nach Anspruch I oder 2, **dadurch gekennzeichnet, daß** diese in einen Kühlschrank einbaubar ist.

4. Vorrichtung nach Anspruch 1 oder 2, **dadurch gekennzeichnet, daß** der Wassserzulauf (3) vor der Einführung in das Druckgefäß (1) durch ein separates Kühlaggregat geführt ist.

5. Vorrichtung nach Anspruch 5, **dadurch gekennzeichnet, daß** die CO₂-Zuführung (3) mit einem Doppel-Rückschlagventil versehen ist.

6. Vorrichtung nach Anspruch 1, **dadurch gekennzeichnet, daß** die Wasserzuführ über einen zeitgesteuerten Schalter regelbar ist.

## Claims

1. An apparatus for preparing carbonated water, with a water feed (2) connected directly with the supply network and a pressure vessel (1) which is connected to a CO₂ pressure cylinder and is provided with a tapping cock and in which injected and pressurized water which is cooled in the feed line or the pressure vessel (1) is mixed with CO₂, **characterized in that** the water feed (2) and a CO₂ supply (3) which is connected to the CO₂ pressure cylinder are disposed in the head zone of the pressure vessel (1).

2. An apparatus as claimed in claim 1, **characterized in that** the water is cooled to 5 to 7°, preferably to 6°.

3. An apparatus as claimed in claim 1 or 2, **characterized in that** the same can be installed in a refrigerator.

4. An apparatus as claimed in claim 1 or 2, **characterized in that** the water supply (2) is guided through a separate refrigerating set prior to the introduction into the pressure vessel (1).

5. An apparatus as claimed in claim 1, **characterized in that** the CO₂ supply (3) is provided with a double check valve.

6. An apparatus as claimed in claim 1, **characterized in that** the water supply can be controlled through a time-controlled switch.

## Revendications

1. Dispositif pour la préparation d'eau carbonatée avec une arrivée d'eau (2) communiquant directement avec le réseau de conduites et un réservoir sous pression (1) raccordé à une bouteille de CO₂ sous pression et pourvu d'un robinet de soutirage, dans lequel de l'eau injectée et pressurisée, refroidie dans la conduite d'arrivée ou le réservoir sous pression (1), est additionnée de CO₂, **caractérisé en ce que** l'arrivée d'eau (2) et une arrivée de CO₂ (3) reliée à la bouteille de CO₂ sont disposées dans partie supérieure du réservoir sous pression (1).

2. Dispositif selon la revendication 1, **caractérisé en ce que** l'eau est refroidie entre 5° et 7°, de préférence à 6°.

3. Dispositif selon la revendication 1 ou 2, **caractérisé en ce qu'**il peut être intégré dans un réfrigérateur.

4. Dispositif selon la revendication 1 ou 2, **caractérisé en ce que** l'arrivée d'eau (2) traverse un groupe réfrigérant séparé avant son entrée dans le réservoir sous pression (1).

5. Dispositif selon la revendication 1, **caractérisé en ce que** l'arrivée de CO₂ (3) est pourvue d'un double clapet anti-retour.

6. Dispositif selon la revendication 1, **caractérisé en ce que** l'arrivée d'eau peut être régulée par un commutateur asservi au temps.
